# EUROPÄISCHE PATENTANMELDUNG

(11) **EP 1 970 189 A1**
(43) Veröffentlichungstag der Anmeldung: **17.09.2008**
(21) Anmeldenummer: 08001037.4
(22) Anmeldetag: 21.01.2008
(51) Int. Cl.: B29C 49/42, B29C 49/76

(54) **Vorrichtung zum Behandeln von Behältnissen**

(30) Priorität: 13.03.2007 DE 102007011931
(71) Anmelder: KRONES AG, 93073 Neutraubling (DE)
(72) Erfinder: Schwöd, Gerhard, 93053 Regensburg (DE); Schönberger, Wolfgang, 93179 Brennberg (DE); Stoiber, Christian, 93185 Michelsneukirchen (DE)

(57) **Zusammenfassung**

Eine Vorrichtung (1) zum Behandeln von Behältnissen mit einem Dorn (4) dessen Querschnitt an dem Querschnitt eines zu behandelnden Behältnisses angepasst ist, wobei der Dorn (4) gegenüber der Trägereinrichtung (30) entlang einer Bewegungsrichtung (L) zwischen einer Ruheposition und einer Arbeitsposition verschiebbar ist. Erfindungsgemäß weißt die Vorrichtung ein gegenüber dem Dorn (4) in einer Verschiebeeinrichtung (R) zwischen wenigstens zwei Positionen verschiebbares Distanzelement (10) auf, wobei die Verschieberichtung (R) die Bewegungsrichtung einen von 0° verschiedenen Winkel miteinander einschließen und wobei dieses Distanzelement derart gestaltet ist, dass durch ein Verschieben des Distanzelementes die Arbeitsposition des Dorns (4) in der Bewegungsrichtung (L) verändert wird.

## Beschreibung

Die Erfindung betrifft eine Vorrichtung zum Behandeln von Behältnissen. Aus dem Stand der Technik sind unterschiedlichste Vorrichtungen zum Behandeln von Behältnissen bekannt, wie beispielsweise Etikettiermaschinen, Blasmaschinen, Inspektionsvorrichtungen für Behältnisse und dergleichen. In jüngerer Zeit hat sich immer mehr die Verwendung von Kunststoffflaschen als Getränkebehältnis durchgesetzt. Derartige Kunststoffbehältnisse liegen dabei während des Herstellungsprozesses zunächst als Rohlinge vor, bei denen jedoch das Gewinde schon fertiggeformt ist. Der Körper dieser Rohlinge wird erwärmt und anschließend in einem Blasvorgang aufgeblasen, sodass als Ergebnis dieses Blasvorganges die fertige Kunststoffflasche vorliegt.

Dabei ist es erforderlich, die Formlinge in geeigneter Weise zu führen und insbesondere in geeigneter Weise während eines Erwärmungsvorganges und während des eigentlichen Blasvorganges zu führen. Zu diesem Zweck weisen die Vorrichtungen einen Dorn auf, der in die Mündung des Gefäßes eingreift und das Behältnis somit führt.

Daher muss dieser Dorn gegenüber dem Behältnis bzw. der Mündung des Gefäßes eine genau definierte Länge haben. Ein zu langer Dorn führt dazu, dass die Erwärmung insbesondere im Bereich unterhalb des Gewindes fehlerhaft verlaufen kann. Ein zu kurzer Dorn kann dazu führen, dass das Behältnis gegenüber dem Dorn keinen sicheren Halt hat.

In jüngerer Zeit sind Rohlinge und Behältnisse bzw. Flaschen bekannt geworden, welche gegenüber früheren Behältnissen ein kürzeres Gewinde bzw. eine kürzere Mündung aufweisen. Dieses kürzere Gewinde dient insbesondere der Gewichtseinsparung an der Mündung des Behältnisses und auch der Einsparung von Herstellungskosten.

Dabei werden sowohl Behältnisse mit längerem Gewinde als auch Behältnisse mit kürzerem Gewinde, wobei diese Gewinde jeweils den gleichen Querschnitt aufweisen, auf den gleichen Anlagen oder Vorrichtungen behandelt. Falls eine derartige Vorrichtung von einem Flaschentyp auf den anderen Flaschentyp umgestellt werden soll, ist es erforderlich, insbesondere die Dornhöhen bzw. die Lage des Dorns bezüglich des Behältnisses anzupassen. Dies wird erforderlich, da die Trag- bzw. Sicherungsringe unterhalb des Gewindes bei der Verarbeitung der Behältnisse auch bei verschiedenen Flaschentypen in einer fest definierten Ebene liegen müssen.

Zu diesem Zweck ist es aus dem Stand der Technik bekannt, den kompletten Dorn auszutauschen, um seine Arbeitsposition, in der er in die Mündung eingeführt ist, geringfügig herabzusetzen, um die Lage des Dorns auf kürzere Gewinde anzupassen. So kann die Lage des Trag- bzw. Sicherungsrings auch bei verschiedenen Gewindetypen pro Behandlungsvorgang immer in der gleichen Ebene verbleiben.

Im Stand der Technik werden die Dorne dabei von oben in das Behältnis bzw. dessen Mündung eingesetzt und nach dem entsprechenden Bearbeitungsvorgang wieder abgezogen.

Dabei ist jedoch die Umstellung von einem Behältnistyp zu einem anderen Behältnistyp mit sehr hohem Aufwand verbunden, da jeder Dornträger mit einem dementsprechend anderen Dorn versehen werden muss.

Weiterhin sind auch Vorrichtungen bekannt, bei denen durch einen Drehvorgang die Lage des Dorns gegenüber dem Behältnis bzw. gegenüber einer Klammer, welche den Hals der Behältnisse hält, variiert. Auch dieser Drehvorgang ist jedoch relativ zeitaufwändig und muss manuell vorgenommen werden.

Der vorliegenden Erfindung liegt daher die Aufgabe zugrunde, eine Vorrichtung zum Behandeln von Behältnissen zur Verfügung zu stellen, welche in vergleichsweise kurzer Zeit und vorteilhaft ohne manuelle Bedienung eine Umstellung der Lagen der Dorne erlaubt.

Dies wird durch eine Vorrichtung nach Anspruch 1 und einer Anordnung nach Anspruch 10 erreicht. Vorteilhafte Ausführungsformen und Weiterbildungen sind Gegenstand der Unteransprüche.

Die erfindungsgemäße Vorrichtung zum Behandeln von Behältnissen weist einen Dorn auf, dessen Querschnitt an dem Innenquerschnitt eines zu behandelnden Behältnisses angepasst ist. Dabei ist der Dorn gegenüber einem Träger, an dem er angeordnet ist, entlang einer Bewegungsrichtung zwischen mehreren Positionen, mindestens aber einer Ruheposition und einer Arbeitsposition verschiebbar, vorzugsweise zwei Ruhepositionen und zwei Arbeitspositionen.

Erfindungsgemäß weist die Vorrichtung ein gegenüber dem Dorn in einer Verschieberichtung zwischen wenigstens zwei Positionen verschiebbares Distanzelement auf, wobei die Verschieberichtung und die Bewegungsrichtung einen von 0° verschiedenen Winkel miteinander einschließen und wobei dieses Distanzelement derart gestaltet ist, dass durch ein Verschieben des Distanzelements die Ruheposition des Dorns entlang der Bewegungsrichtung verändert wird. Die Bewegungsrichtung steht dabei bevorzugt senkrecht auf einer Führungsebene, in welcher der Dorn mit dem Behältnis - beispielsweise durch eine Heizeinrichtung oder durch eine Blaseinrichtung hindurch - geführt wird.

Der Dorn kann mindestens drei, bevorzugt mindestens vier Positionen einnehmen. Die oberste Position - die Ruheposition eins - ist dabei diejenige Position bei der sich der Dorn am weitesten oben befindet. Diese Position ist für Rohlinge mit den höchsten zu verarbeitenden Gewinden gedacht. Die Ruheposition zwei ist eine obere Position, bei der der Dorn gegenüber der Ruheposition eins um die Gewindehöhendifferenz des zu verarbeitenden Rohlings entlang der Bewegungsrichtung nach unten bewegt wird. Die Ruheposition zwei wird durch das Einschieben eines Distanzelements erreicht. Die Ruhepositionen sind die Positionen, bei denen sich die Rohlinge bzw. Behältnisse in einer Behandlungsposition, wie zum Beispiel in einem Heizofen während einer Erwärmung, befinden.
Zur Übernahme von vorgelagerten bzw. zur Übergabe an nachfolgende Maschinen werden die Dorne in Arbeitspositionen gebracht. Die Arbeitsposition eins ist dabei die unterste Position, die der Dorn aufgrund seiner Bauweise und seiner geometrischen Abmessungen einnehmen kann. Diese Position ist für die Übergabe bzw. Übernahme von Rohlingen mit den kleinsten zu verarbeitenden Gewindehöhen gedacht. Wird ein Rohling verarbeitet, dessen Gewindehöhe größer ist, so nimmt der Dorn bei der Übernahme bzw. Übergabe des Rohlings eine Arbeitsposition zwei ein, die sich um die Gewindehöhendifferenz von der Arbeitsposition eins unterscheidet. Auf diese Weise ist gewährleistet, dass sich bei der Übergabe und oder der Übernahme von Rohlingen mit verschiedenen Gewindehöhen die Trag- bzw. Sicherungsringe immer in der gleichen Ebene befinden. Die Stellung der Ruhepositionen wird vorzugsweise über ein Distanzelement definiert, während die Stellung der Arbeitspositionen vorzugsweise über eine Leitkurve festgelegt wird.

Sollen Rohlinge mit mehr als zwei verschiedenen Gewindehöhen bei gleichem Durchmesser verarbeitet werden, so ist es notwendig, dass der Dorn pro zu verarbeitender Gewindehöhe eine Ruheposition und eine Arbeitsposition einnehmen kann.

Der Dorn ist dabei insbesondere derart auf den Querschnitt des zu behandelnden Behältnisses angepasst, dass er genau in dieses eingeschoben werden kann.

Das Distanzelement ist ebenfalls bevorzugt zwischen genau zwei Positionen verschiebbar. In der einen Position wird dabei der Dorn um einen vorbestimmten Bereich abgesenkt und in der zweiten Position, in der bevorzugt das Distanzelement abgezogen ist, ist der Dorn in einer höheren Position. Die letztere Situation ist für Behältnisse mit längerem Gewinde geeignet.

Bevorzugt ist das Distanzelement in einer zu der Bewegungsrichtung im Wesentlichen senkrecht verlaufenden Richtung verschiebbar. Bei dieser Ausführungsform wird damit das Distanzelement senkrecht zu der Bewegungsrichtung und bevorzugt oberhalb des Dorns eingeschoben, um die Arbeitsposition des Dorns zu verändern. Gemäß einer besonders bevorzugten Weiterbildung der Erfindung wird das Distanzelement zwischen einem Träger und dem Dorn eingeschoben.

Durch die erfindungsgemäße Vorrichtung wird erreicht, dass ohne manuelle Hilfe die Arbeitsposition des Dorns verändert werden kann. Dabei ist es möglich, einen eigenen Umstellmodus einzurichten, in dem beispielsweise der Dorn in eine der Arbeitspositionen gedrückt wird und in dieser Position gleichzeitig das Distanzelement eingeschoben wird. In entsprechender Weise ist es auch möglich, das Distanzelement wieder automatisch abzuziehen, damit wieder eine Rückstellung auf Behältnisse mit längeren Gewinden möglich ist.

Bei einer weiteren vorteilhaften Ausführungsform weist das Distanzelement einen gabelförmigen Distanzkörper auf. Dieser Distanzkörper wird dabei bevorzugt in ein oberhalb des Dorns angeordnetes Element, welches in fester Verbindung mit dem Dorn steht, eingefügt. Unter gabelförmig wird dabei verstanden, dass der Distanzkörper zwei außenliegende Vorsprünge aufweist, die in der Verschieberichtung in Richtung des Dorns ragen, sowie eine zwischen diesen Vorsprüngen angeordnete Ausnehmung. Allgemein weist das Distanzelement bzw. der Distanzkörper einen offenen Umfang auf und ist damit insbesondere nicht als geschlossener Ring oder als geschlossene kreisförmige Scheibe ausgeführt.

Vorzugsweise ist der Dorn drehbar um seine eigene Achse und an einer Welle angeordnet und das Distanzelement umgibt diese Welle in einer Position des Distanzelements wenigstens teilweise. Mit anderen Worten legt sich hier der gabelförmige Distanzkörper teilweise um diese Welle, bzw. umgibt diese teilweise. Auf diese Weise kann ein sicherer Halt des Distanzelements gewährleistet werden.

Vorzugsweise ist an dem Distanzelement ein Führungsbolzen angeordnet, wobei sich dieser Führungsbolzen bevorzugt in der Bewegungsrichtung erstreckt. Dieser Führungsbolzen dient, wie im Detail erläutert wird, dazu, das Distanzelement wieder herauszuziehen und damit die Ruheposition wieder auf Behältnisse mit längerem Gewinde umzustellen. Vorzugsweise weist das Distanzelement wenigstens eine Stufe auf, wobei diese Stufe bzw. dieser Absatz in der Bewegungsrichtung gebildet ist. Der Führungsbolzen kann auch um einen vorbestimmten Winkel, beispielsweise um 10° oder 20°, gegenüber der Bewegungsrichtung geneigt sein.

Bei einer weiteren bevorzugten Ausführungsform ist der Distanzkörper lösbar an einem Verschiebekörper angeordnet. Damit wird erreicht, dass die Vorrichtung ohne allzu hohen Aufwand auf unterschiedliche Wellendurchmesser angepasst werden kann. Auch ist es möglich, beispielsweise den Verschiebekörper und den Distanzkörper als einheitliches Bauteil zu wählen und jeweils unterschiedliche Distanzelemente in Abhängigkeit von den jeweiligen Vorrichtungen vorzusehen.

Bei einer weiteren vorteilhaften Ausführungsform weist die Vorrichtung eine erste Verstelleinrichtung auf, die wenigstens zeitweise zwischen dem Führungsbolzen und dem Distanzkörper angeordnet ist. Diese Verstelleinrichtung, beispielsweise eine hydraulisch, pneumatisch oder motorisch angetriebene Verstelleinrichtung dient dazu, um den Führungsbolzen und damit den Distanzkörper abzuziehen und somit die Ruheposition eins einzustellen. Bei einer weiteren vorteilhaften Ausführungsform weist die Vorrichtung eine zweite Verstelleinrichtung auf, und das Distanzelement ist wenigstens zeitweise zwischen dieser zweiten Verstelleinrichtung und der Welle angeordnet. Diese zweite Verstelleinrichtung dient dazu, um das Distanzelement einzurücken und damit beispielsweise auf kürzere Gewinde umzustellen.

Es ist jedoch auch möglich, anstelle dieser Verstelleinrichtungen andere Mechanismen vorzusehen, welche eine Bewegung des Distanzelements ermöglichen, wie beispielsweise Elektromotoren, Magnete oder dergleichen.

Vorzugsweise sind die erste Verstelleinrichtung und die zweite Verstelleinrichtung seitlich gegeneinander versetzt. Unter einer seitlichen Versetzung ist dabei eine seitliche Versetzung in der Bewegungsrichtung des Dorns zu verstehen.

Die vorliegende Erfindung ist weiterhin auf eine Anordnung zum Behandeln von Behältnissen gerichtet, wobei die Anordnung eine Vorrichtung zum Behandeln von Behältnissen nach dem Oberbegriff von Anspruch 1 aufweist. Weiterhin ist eine Leitkurve vorgesehen, welche eine Bewegung des Dorns bzw. der Vorrichtung entlang der Bewegungsrichtung bewirkt. Dabei ist erfindungsgemäß die Schiene wenigstens abschnittsweise und bevorzugt insgesamt in der Bewegungsrichtung bewegbar. Dies bedeutet, dass sich die vollständige Leit- bzw. Steuerkurve, welche die Stellung der Arbeitspositionen des Dorns steuert, gegenüber einem Träger bzw. gegenüber einer Aufhängung bezüglich ihrer Höhe ändert.

Durch diese Bewegung der Leit- oder Steuerkurve in der Bewegungsrichtung kann zwischen der Arbeitsposition eins und der Arbeitsposition zwei des Dorns umgestellt werden, wobei die Arbeitspositionen zur Übergabe des Behältnisses an andere Elemente wie Umlaufsterne dienen.

Vorzugsweise ist die Vorrichtung in der oben beschriebenen Art aufgeführt.

Die vorliegende Erfindung ist weiterhin auf ein Verfahren zum Behandeln von Behältnissen gerichtet, wobei ein Dorn, dessen Querschnitt an den Querschnitt des zu behandelnden Behältnisses angepasst ist, wenigstens abschnittsweise in die Mündung dieses Behältnisses eingeführt wird und wobei der Dorn in einer Bewegungsrichtung zwischen einer Ruheposition und einer Arbeitsposition verschiebbar ist. Erfindungsgemäß wird eine Veränderung zwischen einer Ruheposition eins und einer Ruheposition zwei dadurch verändert, dass ein Distanzelement in einer Verschieberichtung verschoben wird, wobei die Bewegungsrichtung und die Verschieberichtung einen von 0° verschiedenen Winkel miteinander einschließen. Bevorzugt schließen die Bewegungsrichtung und die Verschieberichtung einen Winkel miteinander ein, der zwischen 45° und 135°, bevorzugt zwischen 60° und 120°, und besonders bevorzugt zwischen 80° und 100° liegt.

Bei einem weiteren erfindungsgemäßen Verfahren wird ein Dorn, dessen Querschnitt an den Querschnitt des zu behandelnden Behältnisses angepasst ist, wenigstens abschnittsweise in die Mündung dieses Behältnisses eingeführt, wobei der Dorn in einer Bewegungsrichtung zwischen einer Ruheposition und einer Arbeitsposition verschiebbar ist. Erfindungsgemäß wird hier die Bewegung dieses Dorns mithilfe einer Führungsschiene gesteuert und die Lage der Führungsschiene ist gegenüber einer ortsfesten Basis in der Bewegungsrichtung veränderbar.

Weitere Vorteile und Ausführungsformen in der vorliegenden Erfindung ergeben sich aus den beigefügten Zeichnungen: Darin zeigen:
- Fig. 1: eine erfindungsgemäße Vorrichtung;
- Fig. 2: eine Detailansicht eines erfindungsgemäßen Distanzelements;
- Fig. 3: eine perspektivische Ansicht eines erfindungsgemäßen Distanzelements;
- Fig. 4: eine Ansicht zweier Verstellelemente;
- Fig. 5: einen Vergleich zweiter Arbeitspositionen der erfindungsgemäßen Vorrichtung;
- Fig. 6: eine erfindungsgemäße Anordnung zum Behandeln von Behältnissen; und
- Fig. 7: eine weitere Ansicht der erfindungsgemäßen Vorrichtung.

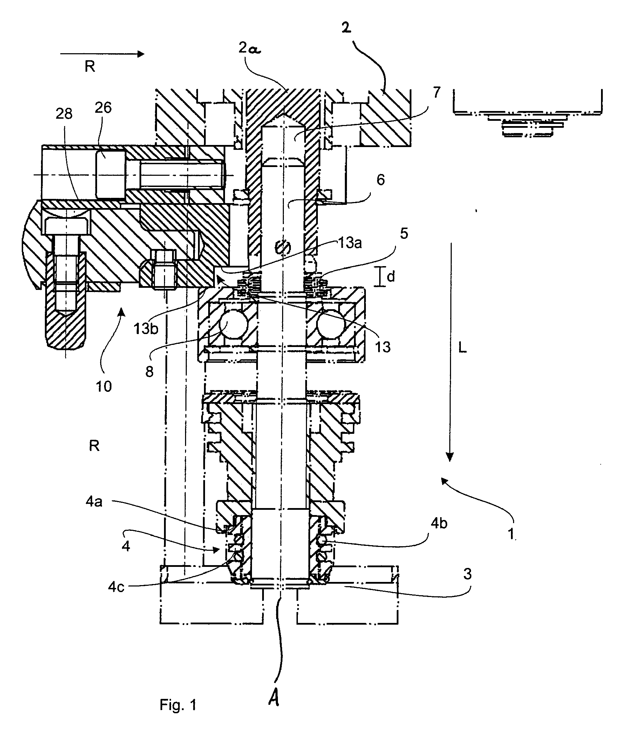

Fig. 1 zeigt eine erfindungsgemäße Vorrichtung 1 zum Behandeln von Getränkebehältnissen. Diese Vorrichtung 1 weist einen in seiner Gesamtheit mit 4 bezeichneten Dorn bzw. Heizdorn auf, der in eine (nicht gezeigte) Mündung des zu behandelnden Behältnisses eingeführt wird. Das Bezugszeichen 3 bezieht sich dabei auf eine Abschirmung, welche einen zu erwärmenden Bereich, der unterhalb dieser Abschirmung 3 liegt, thermisch gegenüber dem oberhalb dieser Abschirmung 3 liegenden Bereich isoliert. Der Körper des aufzublasenden Kunststoffs (beispielsweise PET-Flaschen) befindet sich während des Bearbeitungsvorganges unterhalb dieser Abschirmung 3. Das Bezugszeichen 4a bezieht sich auf einen Anschlag, der an dem Dorn 4 vorgesehen ist, und an dem Mündungsrand des Behältnisses 20 anschlägt. Zum Einbringen des Dorns 4 in das Behältnis wird der Dorn 4 gemeinsam mit einem Dornträger 2a entlang der Bewegungsrichtung L nach unten verschoben. Die (untere) Arbeitsposition eins dieses Dorns 4 ist dabei durch eine (nicht gezeigte) Leitkurve bestimmt. Das Bezugszeichen 4b kennzeichnet einen O-Ring. Das Bezugszeichen 4c bezieht sich auf eine Greifeinrichtung, die in den Innenumfang des zu behandelnden Behältnisses eingreift.

Falls nun von Behältnissen 20 mit längeren Gewinden auf Behältnisse 20 mit kürzeren Gewinden umgestellt wird, wird sich die Relativlage zwischen dem Dorn und dem Gewinde verschieben. Damit sind Korrekturen der Arbeits- und Ruheposition erforderlich. Bei der Umstellung auf eine andere Gewindehöhe ist daher im Stand der Technik ein Wechsel der Garniturteile erforderlich. Das Bezugszeichen 6 bezieht sich auf eine Welle zur drehbaren Lagerung des Dorns 4. Diese drehbare Lagerung erfolgt in einem Lager 8.

Das Bezugszeichen 10 bezieht sich auf ein unten im Detail erläutertes Distanzelement. Dieses Distanzelement 10 ist gegenüber einer Schiene 28, die fest an einem Träger 2 mithilfe einer Schraube 26 montiert ist, angeordnet. Durch Einschieben des Distanzelementes 10 in einer Verschieberichtung R kann die Position der Welle 6 gegenüber dem Dornträger 2a und damit die Ruheposition des Dorns 4 verändert werden. Die Welle 6 ist innerhalb einer Ausnehmung bzw. Bohrung 7 des Trägers beweglich.

Durch eine Stufe 13 bzw. den Abstand d zwischen den beiden Flächen 13a und 13b kann eine Umstellung auf unterschiedliche Gewindehöhen erfolgen. Dabei wäre es prinzipiell auch vorstellbar, dass mehrere derartige Abstufungen vorhanden und damit Umstellungen auf mehrere unterschiedliche Gewindehöhen möglich sind.

Zunächst wird die erfindungsgemäße Vorrichtung auf die niedrigste Gewindehöhe eingestellt. Falls ein Wechsel auf Behältnisse 20 mit längeren Gewinden erforderlich ist, wird das Distanzelement 10 entgegen der Richtung R, d. h. nach außen, gezogen, um somit den Dorn 4 in Ruheposition eins zu bringen.
Würde der Dorn 4 nun nach unten in Arbeitsposition eins gedrückt, so würde der Kragen 20a eine Position relativ weiter unten zum Kragen 20a des Behältnisses 20 mit kurzem Gewinde einnehmen. Das Behältnis 20 kann in dieser Position aber von nachfolgenden Transportsternen nicht übernommen werden, da deren Höhenniveau fest eingestellt ist. Bei Behältnissen 20 mit langen Gewinden muss daher eine Arbeitsposition zwei angefahren werden, die relativ gesehen weiter oben liegt als die Arbeitsposition eins und zwar so, dass sich das Höhenniveau des Kragens 20a des Behältnisses 20 (egal ob mit kurzem oder langem Gewinde) zum Zeitpunkt der Übergabe an nachfolgende Transportsterne nicht verändert. Auf diese Weise wird erreicht, dass eine Übernahme der Behältnisse 20 immer oberhalb eines Kragens 20a erreicht wird.
In der Übernahmestellung erreicht der Dorn 4 aber immer seine tiefste Position. Dies hat den Vorteil, dass Ungenauigkeiten bei der Höheneinstellung nicht bzw. nur wenig auftreten können, was für die Übergabe die Transportsterne enorm wichtig ist. Um die Übergabehöhe trotzdem zu erreichen, wird die (in Fig. 1 nicht gezeigte) Leitschiene 38a, 38b in ihrer Gesamtheit verschoben, sodass die relative Höhe zwischen Transportstern und Dorn 4 eingestellt werden kann.

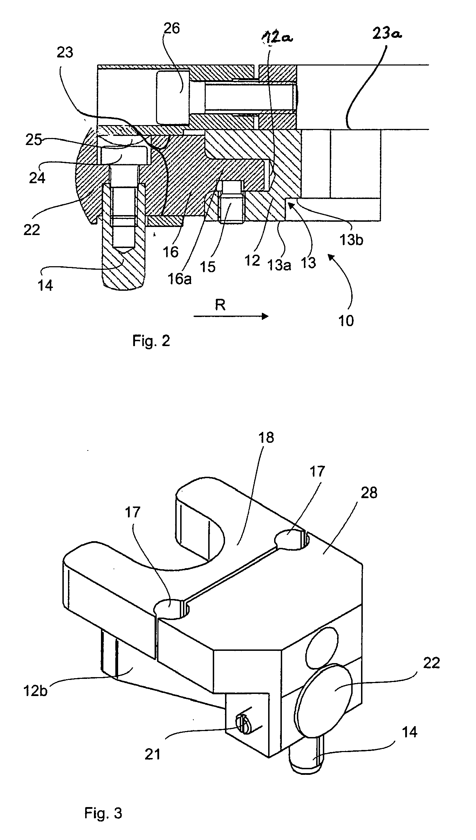

Fig. 2 zeigt eine Querschnittdarstellung eines erfindungsgemäßen Distanzelements 10. Dieses Distanzelement 10 weist dabei einen gabelförmigen Distanzkörper 12 und einen Verschiebekörper 16 auf. Dieser Distanzkörper 12 und der Verschiebekörper 16 sind dabei über eine Schraubverbindung 15 miteinander verbunden. Der Grund für die zweiteilige Ausführung des Distanzelements 10 besteht darin, dass, wie oben gesagt, die Distanzkörper 12 variieren können um sich an unterschiedliche Behältnisse 20 anzupassen. Zur Materialeinsparung kann jedoch der Verschiebekörper 16 jeweils gleich gehalten werden.

Der Verschiebekörper 16 ist gegenüber einer Schiene 28 in der Richtung R verschiebbar.

Wie oben gezeigt, wird durch den Abstand zwischen den beiden Absätzen 13a und 13b die Verschiebung des Dorns 4 bewirkt. Der Verschiebekörper 16 weißt einen Vorsprung 16a auf, der in eine entsprechend angepasste Ausnehmung 12a des Distanzkörpers 12 eingreift. Weiterhin ist an dem Verschiebekörper 16 ein Führungsbolzen 14 angeordnet. Dieser Führungsbolzen 14 wird dabei mit einer Schraube 24 an dem Verschiebekörper 16 befestigt. Dabei ist die Schraube 24 gegenüber der Oberfläche des Verschiebekörpers 16 eingesenkt. Das Bezugszeichen 25 bezieht sich dabei auf eine entsprechende Einsenkmulde für die Schraube 24. Das Bezugszeichen 22 kennzeichnet einen Rastbolzen, der dazu dient, um den Verschiebekörper 16 in Richtung des Pfeils R zu drücken, um das Distanzelement 10 auf die in Fig. 1 gezeigte Welle 6 hinzuzubewegen und um damit die Ruheposition des Dorns 4 zu verändern.

Mit der Schraube 26 wird eine Arretierung der Schiene 28 erreicht. Das Bezugszeichen 23a kennzeichnet eine Gleitfläche der Schiene 28 entlang derer der Distanzkörper 12 gleitet. Das Bezugszeichen 23 kennzeichnet eine Gleitfläche der Schiene 28 entlang derer der Verschiebekörper 16 gleitet.

Fig. 3 zeigt eine perspektivische Darstellung des erfindungsgemäßen Distanzelements 10. Dabei bezieht sich das Bezugszeichen 18 auf eine Abdeckung, welche den Distanzkörper 12 abdeckt. Gleichzeitig dient die Abdeckung 18 zur Stabilisierung der Bewegung des Verschiebekörpers 12. An dem Verschiebekörper 12 sind zwei Arme 12a, 12b angeordnet, wobei hier nur der linke Arm 12b sichtbar ist. Diese Arme umgreifen im eingerückten Zustand wenigstens teilweise die in Fig. 1 gezeigte Welle 6. Das Bezugszeichen 17 bezieht sich auf zwei Öffnungen, mit denen die Abdeckung 18 gegenüber zwei (nicht gezeigten) Wellen arretiert werden kann. Genauer gesagt werden die Wellen durch die Öffnungen 17 geschoben und dann wird die Abdeckung 18 gegenüber der Schiene 28 mithilfe der in Fig. 2 gezeigten Schraube 26 angezogen. Das Bezugszeichen 21 bezieht sich auf eine Schraube, an deren abgewandtem Ende ein Kugeldruckstück angeordnet ist. Diese Schraube dient zur Arretierung des Rastbolzens 22 gegenüber dem Verschiebekörper 16.

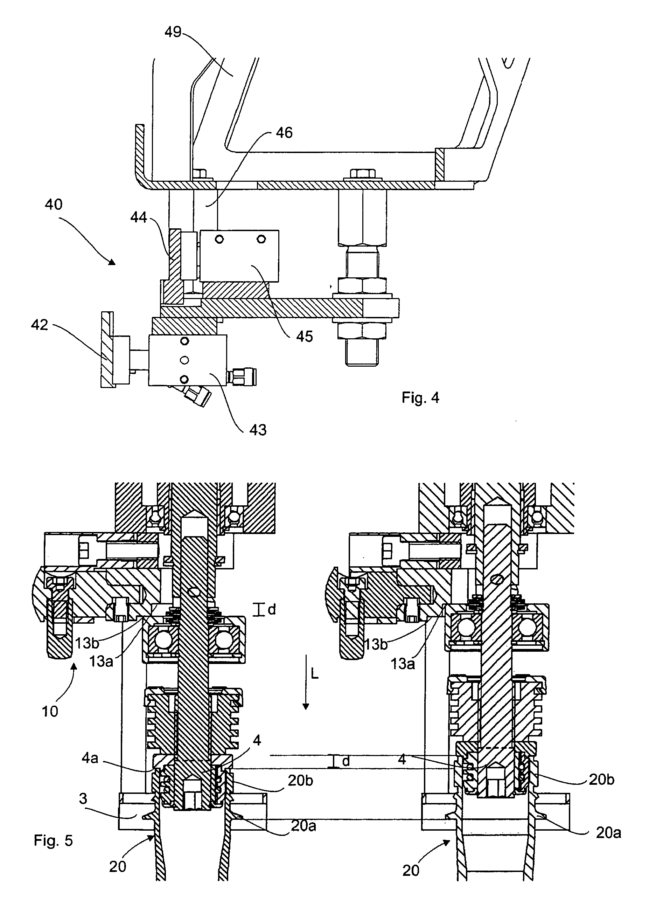

Fig. 4 zeigt eine Verstellvorrichtung 40, welche zum Verstellen des Distanzelements 10 dient. Diese Verstellvorrichtung 40 weist dabei eine erste Verstelleinrichtung 42 und eine zweite Verstelleinrichtung 44 auf. Die erste Verstelleinrichtung 42 hintergreift, wie oben erwähnt, den Führungsbolzen 14 und dient damit zum Herausziehen des Distanzelements 10 weg von der Welle 6 (Fig. 1). Die zweite Verstelleinrichtung 42 wirkt auf den Rastbolzen 22 und dient damit zum Hineindrücken des Distanzelements 10 in der in den Figuren 1 und 2 gezeigten Verschieberichtung R. Die Bezugszeichen 43 und 45 beziehen sich jeweils auf Antriebe für die beiden Verstelleinrichtungen 42 und 44. Dabei kann es sich, wie oben erwähnt, um hydraulische, pneumatische oder motorische Elemente sowie auch um magnetische Elemente handeln.

Das Bezugszeichen 49 bezieht sich auf einen Träger, an dem über ein Gestänge 46 die Verstelleinrichtungen 42 und 44 angeordnet sind.

Fig. 5 zeigt eine Gegenüberstellung zweier Vorrichtungen gemäß Fig. 1 in unterschiedlichen Zuständen, wobei links die Arbeitsposition eins für kurze Mündungen und rechts die Arbeitsposition zwei für lange Mündungen gezeigt ist. Dabei bezieht sich das Bezugszeichen 20 auf ein Behältnis, das Bezugszeichen 20b auf die Mündung des Behältnisses 20. Diese Mündung 20b weist einen Kragen 20a auf, der im Bereich der Abschirmung 3 angeordnet ist. In dem linken Teilbild weist dabei das Behältnis 20 eine kürzere Mündung bzw. ein kürzeres Gewinde auf, als in dem rechten Teilbild. Dem gemäß liegt in dem linken Teilbild der Dorn 4 tiefer als in dem rechten Teilbild, genauer gesagt um denjenigen Abstand d, um den sich die Mündungshöhen unterscheiden. Weiterhin ist in dem linken Teilbild erkennbar, dass hier das Distanzelement 10 eingeschoben ist und sich das Lager 8 gegenüber der Fläche 13b abstützt.

In dem rechten Teilbild stützt sich das Lager 8 bzw. ein Lagergehäuse an der Fläche 13a ab. Hier ist das Distanzelement 10 entgegen der Richtung R herausgezogen.

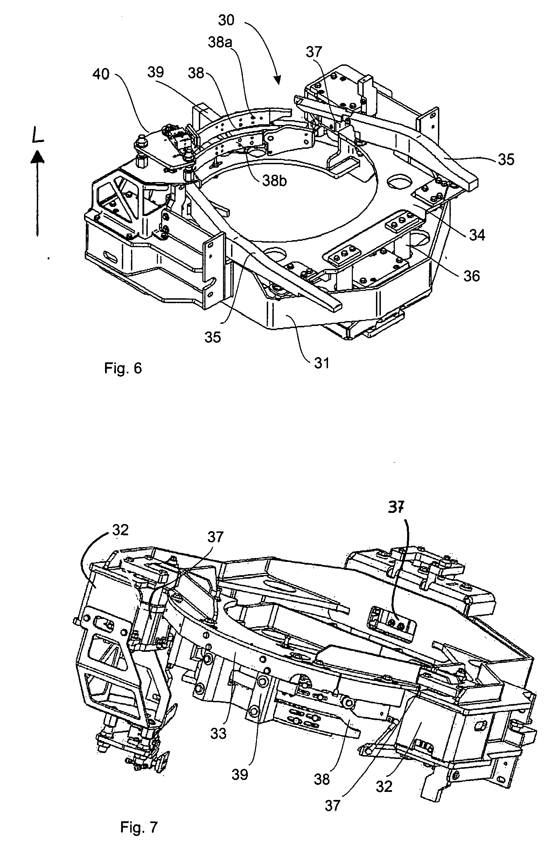

Fig. 6 zeigt eine Ansicht von unten auf eine erfindungsgemäße Anordnung 30 zum Behandeln von Behältnissen 20. Wie oben erwähnt, wird durch das zwischen dem Kettenglied und dem Dorn 4 eingebrachte Distanzelement 10 erreicht, dass die Eintauchtiefe des Dorns 4 in die Abschirmplatte 3 verändert werden kann. Damit kann eine veränderliche Eintauchtiefe entlang der Heizstrecke realisiert werden.

Durch die verschiedenen Mündungshöhen werden auch die Übergabehöhen d. h. die Übergabehöhen (Höhe der Kragen 20a) im Einlaufstern des Ofens und im Einlaufstern des darauf folgenden Blasmoduls verändert. Dieser Veränderung wird mit einer verstellbaren Höhenvorrichtung, auf der sich die Leit-, und Steuerkopfkurve befinden, ausgeglichen.

In Fig. 6 beziehen sich die Bezugszeichen 35, 38 auf eine Leitkurve d. h. diejenige Kurve, an der der Dornträger 2a der in Fig. 1 gezeigten Vorrichtung entlanggleitet. Durch die Gestalt dieser Leitkurve wird die Position des Dorns 4 mitbestimmt.

Die Leitkurve 35 erstreckt sich in Fig. 6 zunächst entlang des mit dem Bezugszeichen 35 gekennzeichneten Bereichs und anschließend zwischen zwei Leitschienen 38a und 38b. Das Bezugszeichen 37 zeigt schematisch einen Zylinder mit dem die gesamte Leitkurve 35, 38, 38a, 38b entlang der Richtung L verschoben werden kann. Das Bezugszeichen 40 kennzeichnet wiederum die in Fig. 4 gezeigte Anordnung zum Verschieben des Distanzelements 10. Damit ist es möglich, die Leitkurve 35 ebenfalls in einer an die Veränderungen der Länge des Gewindes angepassten Distanz zu verschieben und damit wieder die Übergabehöhen auszugleichen. Das Bezugszeichen 31 bezieht sich auf einen Rahmen der Anordnung 30.

Die Höhenverstellung erfolgt in Fig. 6 neben dem gezeigten Hubzylinder 37 mit weiteren entsprechend angeordneten Hubzylindern. Diese weiteren Hubzylinder sind in Fig. 6 nicht vollständig sichtbar. Damit wird durch die Verstellung der Leitkurve 35 die Vorrichtung 1 in der Richtung L verschoben.

Fig. 7 zeigt eine Ansicht der Anordnung aus Fig. 6 von hinten. Dabei ist auch hier wieder die Leitkurve 38 zu erkennen. Diese Leitkurve 38 ist mit Befestigungseinrichtungen 39 an einem Träger 33 montiert. Dieser Träger 33 ist mit Hilfe einer Antriebseinheit 32, welche den Zylinder 37 betätigt, in der Richtung L verstellbar.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Vorrichtung (1) zum Behandeln von Behältnissen (20) mit einem Dorn (4), dessen Querschnitt an dem Querschnitt eines zu behandelnden Behältnisses (20) angepasst ist, wobei der Dorn (4) gegenüber einem Träger (2) entlang einer Bewegungsrichtung (L) zwischen einer Ruheposition und einer Arbeitsposition verschiebbar ist, **dadurch gekennzeichnet, dass** die Vorrichtung (1) ein gegenüber dem Dorn (4) in einer Verschieberichtung (R) zwischen wenigstens zwei Positionen verschiebbares Distanzelement (10) aufweist, wobei die Verschieberichtung (R) und die Bewegungsrichtung (L) einen von 0° verschiedenen Winkel miteinander einschließen und wobei dieses Distanzelement (10) derart gestaltet ist, dass durch ein Verschieben des Distanzelementes (10) die Ruheposition des Dorns (4) entlang der Bewegungsrichtung (L) verändert wird.

2. Vorrichtung (1) nach Anspruch 1, **dadurch gekennzeichnet, dass** das Distanzelement (10) in einer zu der Bewegungsrichtung (L) im Wesentlichen senkrecht verlaufenden Richtung verschiebbar ist.

3. Vorrichtung (1) nach wenigstens einem der vorangegangenen Ansprüche, **dadurch gekennzeichnet, dass** das Distanzelement (10) einen gabelförmigen Distanzkörper (12) aufweist.

4. Vorrichtung (1) nach wenigstens einem der vorangegangenen Ansprüche, **dadurch gekennzeichnet, dass** der Dorn (4) drehbar und um seine Achse (A) angeordnet ist, wobei der Distanzkörper (12) die Welle (6) in einer Position des Distanzelements (10) teilweise umgibt.

5. Vorrichtung (1) nach wenigstens einem der vorangegangenen Ansprüche, **dadurch gekennzeichnet, dass** an dem Distanzelement (10) ein Führungsbolzen (14) angeordnet ist, wobei sich dieser Führungsbolzen (14) in der Bewegungsrichtung (L) erstreckt.

6. Vorrichtung (1) nach wenigstens einem der vorangegangenen Ansprüche 3 bis 5, **dadurch gekennzeichnet, dass** der Distanzkörper (10) lösbar an einem Verschiebekörper (16) angeordnet ist.

7. Vorrichtung (1) nach wenigstens einem der vorangegangenen Ansprüche 3 bis 6, **dadurch gekennzeichnet, dass** die Vorrichtung (1) eine erste Verstelleinrichtung (42) aufweist, die wenigstens zeitweise zwischen dem Führungsbolzen (14) und dem Distanzkörper (12) angeordnet ist.

8. Vorrichtung (1) nach wenigstens einem der vorangegangenen Ansprüche 3 bis 7, **dadurch gekennzeichnet, dass** die Vorrichtung (1) eine zweite Verstelleinrichtung (44) aufweist und das Distanzelement (10) wenigstens zeitweise zwischen der zweiten Verstelleinrichtung (44) und der Welle (6) angeordnet ist.

9. Vorrichtung (1) nach Anspruch 8, **dadurch gekennzeichnet, dass** die erste Verstelleinrichtung (42) und die zweite Verstelleinrichtung (44) in der Bewegungsrichtung (L) seitlich gegeneinander versetzt sind.

10. Anordnung zum Behandeln von Behältnissen (20) wobei die Anordnung eine Vorrichtung (1) zum Behandeln von Behältnissen (20) nach dem Oberbegriff von Anspruch 1 aufweist, und eine Leitschiene (38), welche die Verschiebung der Vorrichtung (1) entlang der Verschieberichtung (L) bewirkt, **dadurch gekennzeichnet, dass** die Leitschiene (38) in der Verschieberichtung (L) bewegbar ist.

11. Anordnung nach Anspruch 10, **dadurch gekennzeichnet, dass** die Vorrichtung (1) nach wenigstens einem der vorangegangenen Ansprüche 1 bis 9 ausgeführt ist.

12. Verfahren zum Behandeln von Behältnissen (20), wobei ein Dorn (4), dessen Querschnitt an den Querschnitt des zu behandelnden Behältnisses (20) angepasst ist, wenigstens abschnittsweise in die Mündung dieses Behältnisses (20) eingeführt wird und wobei der Dorn (4) in einer Bewegungsrichtung (L) zwischen einer Ruheposition und einer Arbeitsposition verschiebbar ist, **dadurch gekennzeichnet, dass** die Ruheposition verändert wird, indem ein Distanzelement (10) in einer Verschieberichtung (R) verschoben wird, wobei die Bewegungsrichtung (L) und die Verschieberichtung (R) einen von 0° verschiedenen Winkel miteinander einschließen.

13. Verfahren, insbesondere nach Anspruch 12, wobei ein Dorn (4), dessen Querschnitt an den Querschnitt des zu behandelnden Behältnisses (20) angepasst ist, wenigstens abschnittsweise in die Mündung dieses Behältnisses (20) eingeführt wird und wobei der Dorn (4) in einer Bewegungsrichtung (L) zwischen einer Ruheposition und einer Arbeitsposition verschiebbar ist, **dadurch gekennzeichnet, dass** die Bewegung dieses Dorns (4) von der Ruheposition in die Arbeitsposition mithilfe einer Leitkurve (35, 38) gesteuert wird und dass die Lage der Leitkurve (35, 38) gegenüber einer ortsfesten Basis in der Bewegungsrichtung (L) veränderbar ist.
